# EUROPÄISCHE PATENTSCHRIFT

(11) **EP 2 756 990 B1**
(45) Veröffentlichungstag und Bekanntmachung des Hinweises auf die Patenterteilung: **20.07.2022**
(21) Anmeldenummer: 14151043.8
(22) Anmeldetag: 14.01.2014
(51) Int. Cl.: B60Q 1/04

(54) **Frontscheinwerfer**
Headlight
Phare avant

(30) Priorität: 22.01.2013 DE 102013200975
(43) Veröffentlichungstag der Anmeldung: 23.07.2014
(73) Patentinhaber: Ford Global Technologies, LLC, Dearborn, MI 48126 (US)
(72) Erfinder: Sipido, Antje, 50226 Frechen (DE); Marik, Manfred, 51371 Leverkusen (DE); Ott, Julian, 50670 Köln (DE)
(74) Vertreter: Dörfler, Thomas

(56) Entgegenhaltungen:
- DE-A1-102006 023 803
- DE-A1-102006 047 420
- DE-A1-102008 017 899
- DE-T2- 60 111 878
- FR-A1- 2 927 584
- JP-A- 2001 213 225
- KR-B1- 100 726 728

## Beschreibung

Die Erfindung betrifft eine Anordnung aus einem Frontscheinwerfer und einer Fahrzeugstruktur, insbesondere für Kraftfahrzeuge, mit einem formstabilen, kastenförmigen Gehäuse, einer in dem Gehäuse angeordneten Leuchteinheit, einer das Gehäuse nach vorn zur Fahrtrichtung abschließenden, durchscheinenden Frontscheibe, an dem Gehäuse vorgesehenen Halterungen zur Verbindung des Gehäuses mit der Fahrzeugstruktur sowie einem in das Gehäuse integrierten Aufprallschutz. Der Aufprallschutz ist als Aufreißvorrichtung ausgebildet, die mindestens einen in der Wandung des Gehäuses ausgebildeten streifenförmigen, biegeempfindlichen Bereich mit einer reduzierten Wandstärke aufweist. Der biegeempfindliche Bereich verläuft zumindest teilweise etwa quer zu der Richtung der möglichen Aufprallbelastung. An mindestens einer Stelle des biegeempfindlichen Bereichs ist ein gegen die Fahrzeugstruktur abgestütztes Aufreißelement vorgesehen, wobei mittels des Aufreißelements ein gezieltes, kontinuierliches Aufreißen des biegeempfindlichen Bereichs erreichbar ist. Das Aufreißelement ist als biegesteifer Fuß ausgebildet, wobei das eine Ende des Fußes fest mit der Außenfläche der Gehäusewand verbunden und das andere Ende gegen die Fahrzeugstruktur abgestützt ist.

Ein derartiger Frontscheinwerfer ist beispielsweise aus der JP 2001 213225 A bekannt.

Bei einem Frontalaufprall mit ungeschützten Verkehrsteilnehmern, wie Fußgängern, Radfahrern und dergleichen, stellen die heute bekannten Frontscheinwerfer aufgrund ihrer Bauform einen harten Aufprallbereich dar. Die geschlossene, kastenförmige Bauweise gibt den oft großvolumigen Gehäusen eine hohe Formstabilität, die sich ungünstig auf den Aufprallschutz auswirkt. Bei einem Aufprall auf den Scheinwerfer reißen in der Regel zunächst die Halterungen zur Fahrzeugstruktur ab, wodurch nur ein geringer Anteil der Aufprallenergie abgebaut wird. Daraufhin wird das formstabile Gehäuse als Ganzes in Aufprallrichtung verschoben. Die voluminösen Schweinwerfer können dabei aufgrund der begrenzten Deformationsräume hinter und unter den Scheinwerfern nur wenig nachgeben, da sie bereits nach einem kurzen Verschiebungsweg auf die sie umgebende Fahrzeugstruktur stoßen. Damit bilden die Scheinwerfer insgesamt eine relativ harte Aufprallfläche und bergen ein erhebliches Verletzungsrisiko für ungeschützte Verkehrsteilnehmer.

Zur Verbesserung des Aufprallschutzes ist es bereits bekannt (DE 10 2009 030 087 A1), Sollbruchstellen in dem Scheinwerfergehäuse vorzusehen. Bei einer Aufprallbelastung bricht das Gehäuse an der Sollbruchstelle auf und faltet sich zusammen. Dadurch gibt der Scheinwerfer insgesamt zwar etwas nach, jedoch werden die Belastungen nicht zielgerichtet an den vorhandenen Sollbruchstellen konzentriert. Es kommt zwar zu lokalen Deformationen, jedoch breiten sich die Risse nicht weit genug aus, sodass das Gehäuse weitgehend intakt und formstabil bleibt. Wenn die Fixierungen des Scheinwerfers zuerst brechen, was bei den bekannten Scheinwerfern vorkommen kann, so wird das gesamte Gehäuse verschoben, ohne dass an den Sollbruchstellen ein ausreichendes Belastungsniveau erreicht wird. Auch in diesem Fall bleibt das Gehäuse intakt und trägt nur wenig zu einem wirksamen Aufprallschutz bei.

Bei einem anderen bekannten Frontscheinwerfer (DE 103 52 903 A1) ist das Gehäuse als energieabsorbierendes Deformationsteil ausgebildet, wobei die obere Wandung parallele Wanddickenreduzierungen in Form von parallel zur Fahrzeuglängsachse verlaufenden Wandungsstreifen aufweist. Hierbei werden entlang der dünnen Wandungsstreifen gezielte Materialschwachstellen gebildet, die sich bei einem Aufprall zusammenfalten und zur Energieabsorption dienen sollen. Auch bei dieser Konstruktion stößt das sich in Aufprallrichtung bewegende Scheinwerfergehäuse sehr bald auf die angrenzende Fahrzeugstruktur. In diesem Zustand ist das Belastungsniveau des Gehäuses oft durch die übrigen, beim Aufprall beaufschlagten Komponenten, z.B. durch die Motorhaube, schon so weit abgebaut worden, dass kein notwendiger Initialbruch im Scheinwerfergehäuse verursacht wird. Das Gehäuse bleibt deshalb zumindest teilweise intakt und trägt nicht oder nur unzureichend zu einem wirksamen Aufprallschutz bei.

Der Erfindung liegt daher die Aufgabe zugrunde, eine Anordnung aus einem Frontscheinwerfer und einer Fahrzeugstruktur zu schaffen, die eine gegenüber bekannten Anordnungen verstärkte Nachgiebigkeit des Scheinwerfers aufweist und zu einer erheblichen Verbesserung des Aufprallschutzes führt.

Erfindungsgemäß wird diese Aufgabe durch eine Anordnung mit den Merkmalen des Patentanspruchs 1 gelöst.

Die erfindungsgemäße Aufreißvorrichtung, die in das formstabile Scheinwerfergehäuse integriert ist, führt zu einer gezielten Konzentration der Aufprallbelastung in den vorgesehenen biegeempfindlichen Bereichen des Gehäuses. Die biegeempfindlichen Bereiche sollen dabei als Sollbruchstellen dienen.

Vorzugsweise ist der biegeempfindliche Bereich durch eine Gehäusestufe gebildet, die im Vergleich zu dem übrigen Gehäuse eine reduzierte Wandstärke aufweist.

Besonders wirksam ist die erfindungsgemäße Aufreißvorrichtung, wenn der biegeempfindliche Bereich im Boden des Gehäuses ausgebildet ist. Durch diese Maßnahme ist eine optimale Deformation des Scheinwerfergehäuses möglich.

Erfindungsgemäß ist das Aufreißelement als biegesteifer Fuß ausgebildet, wobei das eine Ende des Fußes fest mit der Außenfläche der Gehäusewand, vorzugsweise mit der Unterseite des Gehäusebodens, verbunden und das andere Ende gegen die Fahrzeugstruktur abgestützt ist. Wirkt also die Aufprallbelastung auf das Gehäuse ein, so wird das Scheinwerfergehäuse gegen den nach unten gerichteten biegesteifen Fuß verschoben. Da dessen unteres Ende an der Fahrzeugstruktur fixiert ist, wirkt der biegesteife Fuß der Verschiebung entgegen und leitet die Belastung in den Gehäuseboden ein. Dies führt zur Verbiegung des Gehäusebodens, und zwar zunächst im Bereich des biegesteifen Fußes, wo die Gehäusestufe lokal und spontan einreißt; anschließend setzt sich der Riss gezielt und kontinuierlich fort.

Ferner weist das gegen die Fahrzeugstruktur abgestützte Ende des biegesteifen Fußes einen abgerundeten Kopf auf, der in einer Mulde eines Bauteils der Fahrzeugstruktur sitzt und im Falle eines Aufpralls schwenkbar in der Mulde geführt ist.

Der biegesteife Fuß ist zweckmäßig unmittelbar hinter der eine Sollbruchstelle bildenden Gehäusestufe angeordnet. Dadurch ist ein besonders schneller und wirksamer Aufreißeffekt möglich.

Ferner ist der biegesteife Fuß vorzugsweise mit einer Verstärkungsrippe versehen, die der möglichen Aufprallrichtung entgegengerichtet ist.

Zur weiteren Verbesserung des Aufreißvorgangs ist die an dem biegesteifen Fuß vorgesehene Verstärkungsrippe mit einer von der Gehäusewand wegführenden geneigten Schräge versehen, auf die sich im Falle eines Aufpralls und eines damit einhergehenden Brechens der Sollbruchstelle die Bruchkante schiebt und dadurch die Gehäusewand, mit der der biegesteife Fuß verbunden ist, ruckartig und gezielt in das Gehäuseinnere verbiegt. Das Maximum der Aufbiegung liegt somit im Bereich der Verstärkungsrippe des Fußes, und zwar direkt an der biegeempfindlichen Gehäusestufe. Von dort aus reißt dann die Sollbruchstelle spontan über ihre gesamte Länge auf.

Zweckmäßig verläuft der an dem Gehäuse vorgesehene Verbindungsflansch, der zur Halterung der Frontscheibe dient, unmittelbar vor dem biegesteifen Fuß und bildet eine biegesteife Bruchkante. Die Biegesteifigkeit des Verbindungsflanschs wird durch seinen vergleichsweise großen Querschnitt bewirkt. Aufgrund dieser Merkmale wird eine Konzentration der Biegebelastung in der Gehäusestufe erzeugt.

Die Erfindung ist in der Zeichnung beispielhaft veranschaulicht und im Nachstehenden im Einzelnen anhand der Zeichnung beschrieben. Es zeigen:
- Fig. 1:: einen Ausschnitt aus der Vorderfront eines Personenkraftwagens mit einem eingebauten Frontscheinwerfer,
- Fig. 2:: einen Schnitt entlang der Linie II-II aus Fig. 1,
- Fig. 3:: den Bereich III aus Fig. 2 in vergrößerter Darstellung,
- Fig. 4:: den gleichen Schnitt durch den Scheinwerfer wie in Fig. 2, jedoch mit den angrenzenden Karosserieteilen, und zwar in einem nicht deformierten Zustand,
- Fig. 5:: die gleiche Darstellung wie in Fig. 4 in verformtem Zustand nach einem Aufprall,
- Fig. 6:: den Scheinwerfer gemäß Fig. 1 bis 5 in perspektivischer Darstellung,
- Fig. 7:: den Scheinwerfer gemäß Fig. 1 bis 5 in etwas vergrößerter Darstellung als Ausschnitt aus Fig. 6 mit der biegeempfindlichen Gehäusestufe vor einem Aufprall und
- Fig. 8:: die gleiche Darstellung wie in Fig. 7 nach einem Aufprall mit aufgerissener Gehäusestufe.

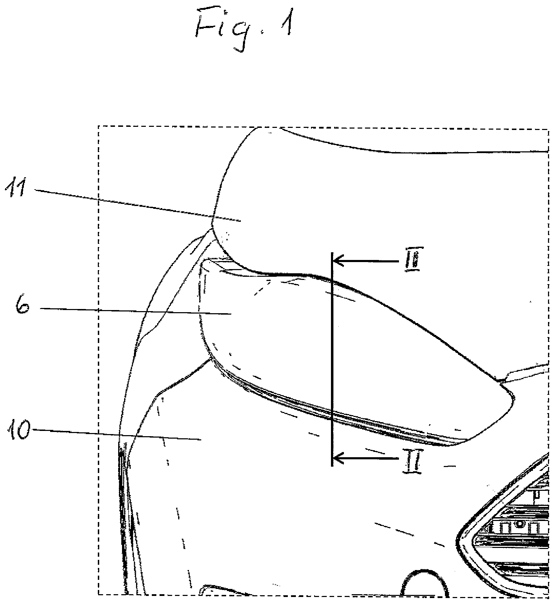

In Fig. 1 der Zeichnung ist ein Ausschnitt aus dem rechten vorderen Ende eines Personenkraftwagens dargestellt, auf welchem die Frontscheibe 6 eines Scheinwerfers zu sehen ist, deren untere Seite an den Stoßfänger 10 und die obere Seite an die Motorhaube 11 angrenzt.

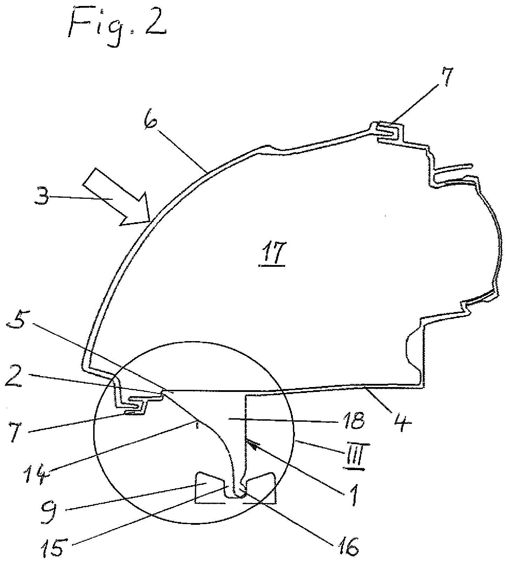

In dem Schnitt gemäß Fig. 2 der Zeichnung sind wesentliche Einzelheiten des Scheinwerfergehäuses 17 zu erkennen, die zu dem Aufprallschutz beitragen.

Das Scheinwerfergehäuse 17 ist als Kunststoffteil ausgebildet und weist an seinem oberen und unteren Ende je einen Verbindungsflansch 7 auf, der zur Aufnahme und festen Halterung der Frontscheibe 6 dient.

An dem Gehäuseboden 4 ist ein nach unten gerichteter biegesteifer Fuß 1 vorgesehen, der das Kernstück der Aufreißvorrichtung bildet. Das obere Ende des Fußes 1 ist fest mit der nach unten weisenden Außenfläche des Gehäusebodens 4 verbunden, während das untere Ende des Fußes 1 gegen die Fahrzeugstruktur abgestützt ist. Zur Abstützung dient ein an der Fahrzeugstruktur sitzendes Bauteil 9, welches mit einer Mulde 15 versehen ist. Das gegen das Bauteil 9 abgestützte untere Ende des biegesteifen Fußes 1 ist mit einem abgerundeten Kopf 16 versehen, der im Falle eines Aufpralls schwenkbar in der Mulde 15 geführt ist.

Unmittelbar vor dem an dem Gehäuseboden 4 sitzenden Verbindungsflansch 7 in Richtung zur Frontscheibe 6 ist ein biegeempfindlicher Bereich vorgesehen, der durch eine Gehäusestufe 2 gebildet ist. Die Gehäusestufe 2 weist im Vergleich zu dem übrigen Gehäuse eine reduzierte Wandstärke auf, die im Falle einer Aufprallbelastung als Sollbruchstelle dient.

Der biegesteife Fuß 1, der als Aufreißelement für die Gehäusestufe 2 dient, ist mit einer einstückig angeformten Verstärkungsrippe 18 versehen, die auf der zu der Gehäusestufe 2 weisenden Seite eine von dem Gehäuseboden 4 wegführende Schräge 14 aufweist. Das in den Gehäuseboden 4 einlaufende Ende 5 der Schräge 14 der Verstärkungsrippe 18 reicht bis unmittelbar an die Gehäusestufe 2 heran.

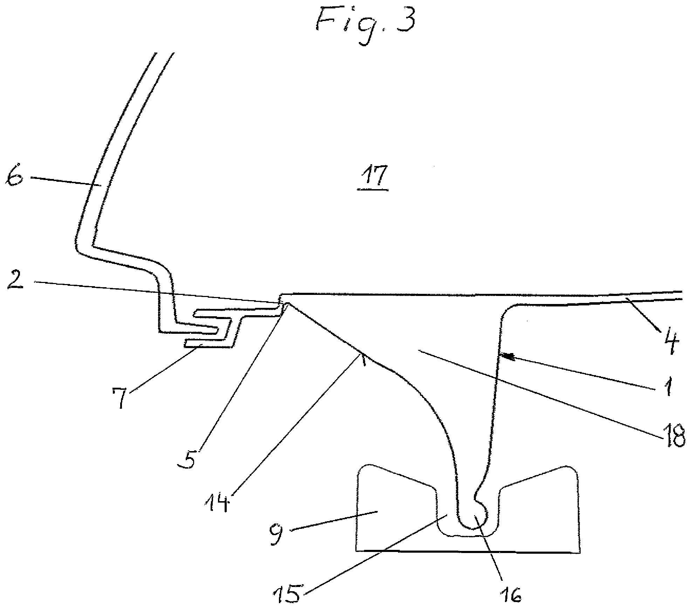

Die einzelnen konstruktiven Details der Aufreißvorrichtung sind besonders deutlich aus der Fig. 3 zu erkennen, die die Aufreißvorrichtung in vergrößerter Darstellung zeigt.

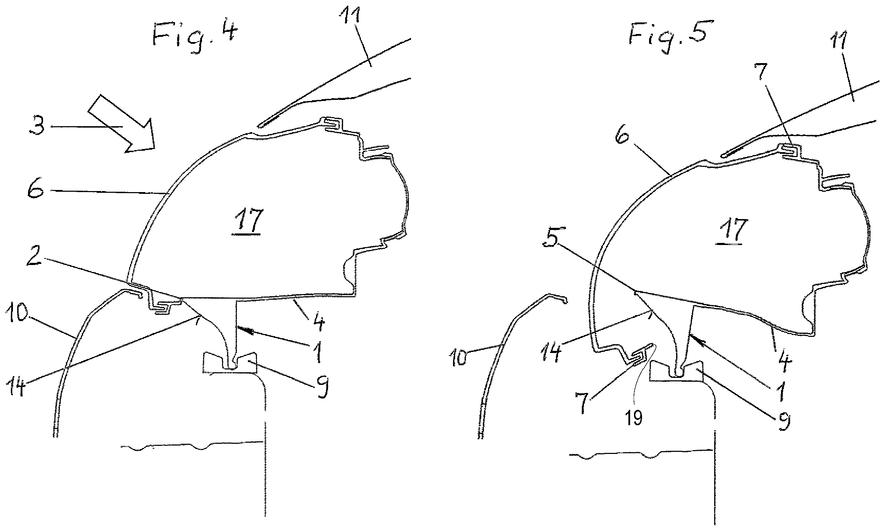

In den Figuren 4 und 5 ist die besonders vorteilhafte Wirkung der erfindungsgemäßen Aufreißvorrichtung veranschaulicht. In diesen beiden Figuren sind außer dem Scheinwerfergehäuse 17 auch die angrenzenden Kraftfahrzeugteile dargestellt, nämlich oben die Motorhaube 11 und unten der Stoßfänger 10.

Im Falle eines Aufpralls in Richtung des in Fig. 4 dargestellten Pfeils 3 reißt zunächst die als Sollbruchstelle ausgebildete Gehäusestufe 2 im Bereich des biegesteifen Fußes 1 auf. Die biegesteif ausgebildete Bruchkante, die durch den Verbindungsflansch 7 und den in diesen eingreifenden Rand der Frontscheibe 6 gebildet wird, wird nach unten verschoben und drückt dadurch den Gehäuseboden 4 kontinuierlich nach oben in das Scheinwerfergehäuse 17 hinein. Im weiteren Verlauf der Verformung wird der Gehäuseboden 4 in die in Fig. 5 dargestellte Position geschoben, sodass die Frontscheibe im Falle eines Aufpralls sich relativ weit zurückbewegen kann.

Das Aufreißen der als biegeempfindlicher Bereich ausgebildeten Gehäusestufe 2 beginnt im Bereich des als biegesteifer Fuß 1 ausgebildeten Aufreißelements, und der Riss setzt sich dann mit großer Geschwindigkeit entlang der Sollbruchstelle fort, und zwar je nach Lage des biegesteifen Fußes 1 nach einer oder nach beiden Seiten.

Bereits bei geringer Aufprallenergie kann so am Ende 5 der Schräge 14 der Verstärkungsrippe 18 ein gezieltes Aufreißen des Gehäuses erreicht werden. Dadurch wird die Biegesteifigkeit des Gehäuses erheblich reduziert und die fortschreitende Verformung des Gehäusebodens 4 führt zu einer Rissausbildung entlang der Gehäusestufe 2 über die gesamte Breite des Gehäusebodens 4 hinweg. In der Folge wird der Gehäuseboden 4 einschließlich seinem biegesteifen Fuß 1 in das Scheinwerfergehäuse 17 hineingedrückt, wodurch ein großer Anteil der Aufprallenergie absorbiert und gleichzeitig ein beträchtlicher Deformationsweg freigegeben wird. Die zunehmende Deformation des Gehäusebodens 4 führt dabei zu weiteren Rissen entlang von senkrecht zur Biegeachse verlaufenden Querschnittssprüngen 8, die in Form von Kanten und Rippen vorliegen. Dadurch wird fortlaufend Energie abgebaut und weiterer Deformationsweg freigegeben.

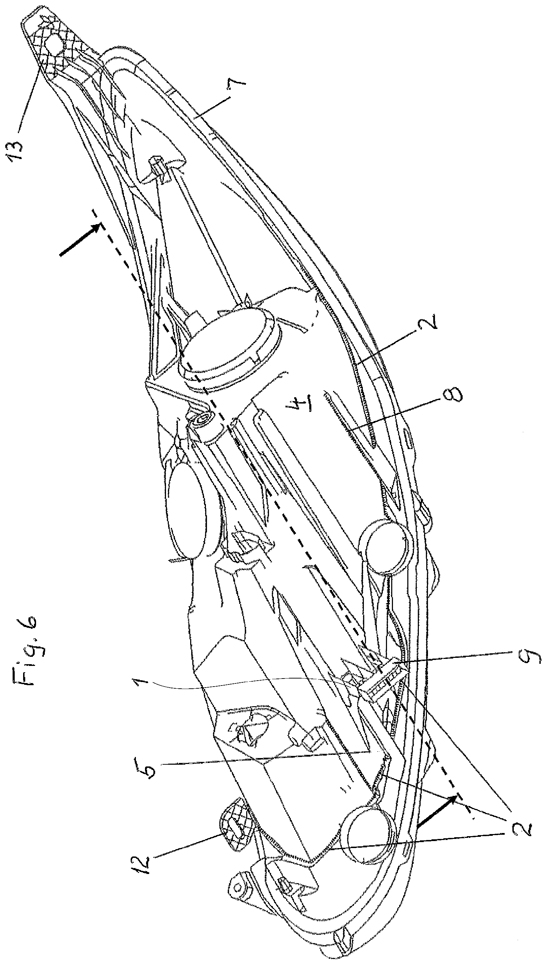

In Fig. 6, in der das Scheinwerfergehäuse in perspektivischer Darstellung veranschaulicht ist, ist entlang einer gepunkteten Linie die Gehäusestufe 2 mit reduzierter Wandstärke dargestellt, an der das Aufreißen, ausgehend von dem als biegesteifen Fuß 1 ausgebildeten Aufreißelements, erfolgt.

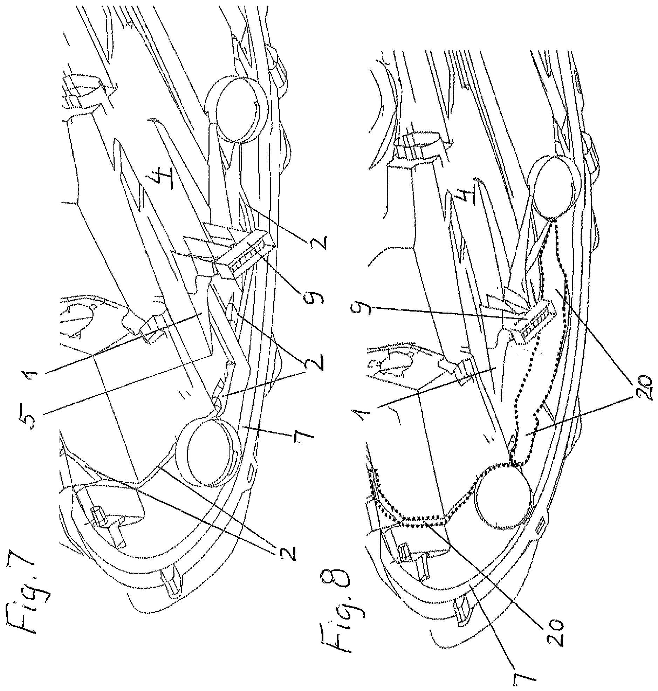

In den Figuren 7 und 8 ist das Scheinwerfergehäuse vor und nach einem Aufprall dargestellt, wobei insbesondere in Fig. 8 veranschaulicht ist, wie sich der Riss 20 entlang der Gehäusestufe 2 im Detail ausbildet.

Der erfindungsgemäße Scheinwerfer fungiert somit im Frontbereich eines Kraftfahrzeugs als sehr wirksames Deformationselement und führt zu einer erheblichen Verbesserung des Aufprallschutzes von ungesicherten Verkehrsteilnehmern.

Gleichzeitig entsteht der Vorteil, dass bei einem Aufprall die hinter dem Scheinwerfergehäuse angeordneten Funktionsteile des Fahrzeugs weniger stark bzw. überhaupt nicht beschädigt werden, da die hintere Halterungen 13 in ihrer Position verbleibt, denn die Aufprallenergie wird im Wesentlichen innerhalb des Scheinwerfergehäuses absorbiert und abgebaut. Je nach Aufprall kann die vordere Halterung 12 brechen oder auch in ihrer Position verbleiben.

### BEZUGSZEICHENLISTE

- 1: Aufreißelement (biegesteifer Fuß)
- 2: Gehäusestufe (biegeempfindlicher Bereich)
- 3: Richtungspfeil der Aufprallbelastung
- 4: Gehäuseboden
- 5: Ende der Verstärkungsrippe
- 6: Frontscheibe
- 7: Verbindungsflansch am Gehäuse
- 8: kritische Querschnittssprünge im Gehäuse
- 9: Bauteil an Fahrzeugstruktur
- 10: Stoßfänger
- 11: Motorhaube
- 12: vordere Halterung
- 13: hintere Halterung
- 14: Schräge
- 15: Mulde
- 16: abgerundeter Kopf
- 17: Scheinwerfergehäuse
- 18: Verstärkungsrippe
- 19: Bruchkante
- 20: Riss

## Patentansprüche

1. Anordnung aus einer Fahrzeugstruktur und einem Frontscheinwerfer
mit einem formstabilen, kastenförmigen Gehäuse (17), einer in dem Gehäuse (17) angeordneten Leuchteinheit, einer das Gehäuse (17) nach vorn zur Fahrtrichtung abschließenden, durchscheinenden Frontscheibe (6), an dem Gehäuse (17) vorgesehenen Halterungen (12, 13) zur Verbindung des Gehäuses (17) mit der Fahrzeugstruktur sowie einem in das Gehäuse (17) integrierten Aufprallschutz, wobei der Aufprallschutz als Aufreißvorrichtung ausgebildet ist, die mindestens einen in der Wandung des Gehäuses (17) ausgebildeten streifenförmigen, biegeempfindlichen Bereich mit einer reduzierten Wandstärke aufweist, und der biegeempfindliche Bereich zumindest teilweise etwa quer zu der Richtung der möglichen Aufprallbelastung verläuft und an mindestens einer Stelle des biegeempfindlichen Bereichs ein gegen die Fahrzeugstruktur abgestütztes Aufreißelement (1) vorgesehen ist, wobei mittels des Aufreißelements (1) ein gezieltes, kontinuierliches Aufreißen des biegeempfindlichen Bereichs erreichbar ist, wobei das Aufreißelement (1) als biegesteifer Fuß ausgebildet ist und das eine Ende des Fußes fest mit der Außenfläche der Gehäusewand verbunden und das andere Ende gegen die Fahrzeugstruktur abgestützt ist,
**dadurch gekennzeichnet, dass**
das gegen die Fahrzeugstruktur abgestützte Ende des biegesteifen Fußes (1) einen abgerundeten Kopf (16) aufweist, der in einer Mulde (15) eines Bauteils (9) der Fahrzeugstruktur sitzt und im Falle eines Aufpralls schwenkbar in der Mulde (15) geführt ist.

2. Anordnung nach Anspruch 1, **dadurch gekennzeichnet, dass** der biegeempfindliche Bereich durch eine Gehäusestufe (2) gebildet ist, die im Vergleich zu dem übrigen Gehäuse eine reduzierte Wandstärke aufweist.

3. Anordnung nach Anspruch 1 oder 2,
**dadurch gekennzeichnet, dass**
der biegeempfindliche Bereich im Boden (4) des Gehäuses (17) ausgebildet ist.

4. Anordnung nach einem der vorhergehenden Ansprüche,
**dadurch gekennzeichnet, dass**
der biegesteife Fuß (1) unmittelbar hinter der eine Sollbruchstelle bildenden Gehäusestufe (2) angeordnet ist.

5. Anordnung nach Anspruch 4,
**dadurch gekennzeichnet, dass**
im Falle eines Aufpralls und eines damit einhergehenden Brechens der Sollbruchstelle eine sich bildende Bruchkante (19) in Richtung des gegen die Fahrzeugstruktur abstützbaren Endes des biegesteifen Fußes (1) verschoben wird und dadurch die Gehäusewand, die mit dem biegesteifen Fuß verbunden ist, in das Gehäuseinnere drückt.

6. Anordnung nach Anspruch 4 oder 5,
**dadurch gekennzeichnet, dass**
der biegesteife Fuß (1) mindestens eine der möglichen Aufprallrichtung entgegengerichtete Verstärkungsrippe (18) aufweist.

7. Anordnung nach Anspruch 6,
**dadurch gekennzeichnet, dass**
an der Verstärkungsrippe (18) eine von der Gehäusewand wegführende Schräge (14) vorgesehen ist, auf die sich im Falle eines Aufpralls und eines damit einhergehenden Brechens der Sollbruchstelle die sich gebildete Bruchkante (19) schiebt und dadurch die Gehäusewand, mit der der biegesteife Fuß verbunden ist, in das Gehäuseinnere drückt.

8. Anordnung nach einem der vorhergehenden Ansprüche,
**dadurch gekennzeichnet, dass**
ein an dem Gehäuse (17) vorgesehener Verbindungsflansch (7), der zur Halterung der Frontscheibe (6) dient, unmittelbar vor dem biegesteifen Fuß (1) entlangläuft.

9. Anordnung nach Anspruch 8,
**dadurch gekennzeichnet, dass**
der Verbindungsflansch (7) eine biegesteife Bruchkante bildet.

## Claims

1. Assembly of a vehicle structure and a headlight, having a dimensionally stable, box-shaped housing (17); a light unit disposed in the housing (17); a translucent front pane (6) sealing the housing (17) towards the front relative to the direction of travel; mountings (12, 13) provided on the housing (17) for connecting the housing (17) to the vehicle structure as well as impact protection integrated in the housing (17); wherein the impact protection is configured as a rupture device which has at least one strip-shaped, flexurally sensitive region of reduced wall thickness configured in the wall of the housing (17), and the flexurally sensitive region at least partially extends approximately transversely to the direction of the potential impact loading, and a rupture element (1) supported against the vehicle structure is provided on at least one point of the flexurally sensitive region; wherein targeted continuous rupturing of the flexurally sensitive region is able to be achieved by means of the rupture element (1); wherein the rupture element (1) is configured as a flexurally rigid foot and the one end of the foot is fixedly connected to the outer face of the housing wall, and the other end is supported against the vehicle structure,
**characterized in that**
the end of the flexurally rigid foot (1) supported against the vehicle structure has a rounded head (16) which is located in a depression (15) of a component (9) of the vehicle structure and in the event of an impact is pivotably guided in the depression (15).

2. Assembly according to Claim 1, **characterized in that** the flexurally sensitive region is formed by a housing step (2) which in comparison with the remaining housing has a reduced wall thickness.

3. Assembly according to Claim 1 or 2,
**characterized in that**
the flexurally sensitive region is configured in the base (4) of the housing (17).

4. Assembly according to one of the preceding claims, **characterized in that**
the flexurally rigid foot (1) is disposed directly behind the housing step (2) forming a predetermined breaking point.

5. Assembly according to Claim 4,
**characterized in that**,
in the event of an impact and an associated breakage of the predetermined breaking point, a breaking edge (19), forming in the direction of the end of the flexurally rigid foot (1) supportable against the vehicle structure, is displaced and as a result pushes the housing wall that is connected to the flexurally rigid foot into the housing interior.

6. Assembly according to Claim 4 or 5,
**characterized in that**
the flexurally rigid foot (1) has at least one reinforcing rib (18) oriented counter to the potential direction of the impact.

7. Assembly according to Claim 6,
**characterized in that**
an oblique portion (14) leading away from the housing wall is provided on the reinforcing rib (18), onto which the formed breaking edge (19) is pushed in the event of an impact and an associated breakage of the predetermined breaking point, and as a result pushes the housing wall to which the flexurally rigid foot is connected into the housing interior.

8. Assembly according to one of the preceding claims, **characterized in that**
a connecting flange (7) which is provided on the housing (17) and serves for mounting the front pane (6) extends directly in front of the flexurally rigid foot (1).

9. Assembly according to Claim 8,
**characterized in that**
the connecting flange (7) forms a flexurally rigid breaking edge.

## Revendications

1. Agencement d'une structure de véhicule et d'un phare avant comprenant un boîtier (17) indéformable en forme de boîte, une unité d'éclairage agencée dans le boîtier (17), un verre frontal translucide (6) fermant le boîtier (17) vers l'avant par rapport à la direction de marche, des fixations (12, 13) prévues sur le boîtier (17) pour relier le boîtier (17) à la structure de véhicule, ainsi qu'une protection contre les chocs intégrée dans le boîtier (17), la protection contre les chocs étant réalisée sous la forme d'un dispositif de déchirement qui présente au moins une zone sensible à la flexion, en forme de bande, réalisée dans la paroi du boîtier (17), ayant une épaisseur de paroi réduite, et la zone sensible à la flexion s'étendant au moins en partie approximativement transversalement à la direction de la charge de choc éventuelle et, en au moins un emplacement de la zone sensible à la flexion, un élément de déchirement (1) appuyé contre la structure de véhicule étant prévu, l'élément de déchirement (1) permettant d'obtenir un déchirement continu ciblé de la zone sensible à la flexion, l'élément de déchirement (1) étant réalisé sous la forme d'un pied rigide en flexion et l'une des extrémités du pied étant reliée de manière fixe à la surface extérieure de la paroi de boîtier et l'autre extrémité étant appuyée contre la structure de véhicule, **caractérisé en ce que**
l'extrémité du pied rigide en flexion (1) appuyée contre la structure de véhicule présente une tête arrondie (16), qui repose dans une cavité (15) d'un composant (9) de la structure de véhicule et qui est guidée de manière pivotante dans la cavité (15) en cas de choc.

2. Agencement selon la revendication 1, **caractérisé en ce que** la zone sensible à la flexion est formée par un étage de boîtier (2), qui présente une épaisseur de paroi réduite par rapport au reste du boîtier.

3. Agencement selon la revendication 1 ou 2, **caractérisé en ce que** la zone sensible à la flexion est réalisée dans le fond (4) du boîtier (17).

4. Agencement selon l'une quelconque des revendications précédentes, **caractérisé en ce que** le pied rigide en flexion (1) est agencé directement derrière l'étage de boîtier (2) formant un point destiné à la rupture.

5. Agencement selon la revendication 4, **caractérisé en ce qu'**en cas de choc et de rupture du point destiné à la rupture l'accompagnant, une arête de rupture (19) qui se forme est déplacée en direction de l'extrémité du pied rigide en flexion (1) qui peut être appuyée contre la structure de véhicule et presse ainsi la paroi de boîtier qui est reliée au pied rigide en flexion vers l'intérieur du boîtier.

6. Agencement selon la revendication 4 ou 5, **caractérisé en ce que** le pied rigide en flexion (1) présente au moins une nervure de renforcement (18) opposée à la direction de choc éventuelle.

7. Agencement selon la revendication 6, **caractérisé en ce qu'**un biais (14) s'éloignant de la paroi de boîtier est prévu sur la nervure de renforcement (18), sur lequel l'arête de rupture (19) qui s'est formée en cas de choc et de rupture du point destiné à la rupture l'accompagnant se déplace, et presse ainsi la paroi de boîtier, à laquelle le pied rigide en flexion est relié, vers l'intérieur du boîtier.

8. Agencement selon l'une quelconque des revendications précédentes, **caractérisé en ce qu'**une bride de liaison (7) prévue sur le boîtier (17), qui sert à maintenir le verre frontal (6), s'étend directement devant le pied rigide en flexion (1).

9. Agencement selon la revendication 8, **caractérisé en ce que** la bride de liaison (7) forme une arête de rupture rigide en flexion.
